# EUROPÄISCHE PATENTSCHRIFT

(11) **EP 4 204 717 B1**
(45) Veröffentlichungstag und Bekanntmachung des Hinweises auf die Patenterteilung: **31.01.2024**
(21) Anmeldenummer: 22809458.7
(22) Anmeldetag: 27.10.2022
(51) Int. Cl.: F16H 25/06

(54) **KOAXIALGETRIEBE**
COAXIAL TRANSMISSION
TRANSMISSION COAXIALE

(30) Priorität: 16.11.2021 WO PCT/EP2021/081890
(43) Veröffentlichungstag der Anmeldung: 05.07.2023
(73) Patentinhaber: Kraken Innovations GmbH, 8010 Graz (AT)
(72) Erfinder: FÜRHAPTER, Daniel, 8020 Graz (AT); DIETRICH, Lukas, 8010 Graz (AT); EISELE, Philipp, 2700 Wiener Neustadt (AT)
(74) Vertreter: KLIMENT & HENHAPEL
(86) Internationale Anmeldenummer: PCT/EP2022/080148
(87) Internationale Veröffentlichungsnummer: WO 2023/088656

(56) Entgegenhaltungen:
- WO-A1-2021/018752
- RU-C2- 2 165 552
- US-A- 1 543 791
- US-A- 5 351 568

## Beschreibung

### GEBIET DER ERFINDUNG

Die vorliegende Erfindung betrifft ein Koaxialgetriebe umfassend eine um eine Drehachse drehbare Kurbelwelle mit mindestens einem Hubzapfen, das Koaxialgetriebe weiters umfassend mindestens einen Kolbensatz, der mehrere, vorzugsweise mindestens drei, Kolben aufweist, die jeweils an einer von der Drehachse weg weisenden ersten Stirnseite eine Verzahnung mit mindestens einem Zahn aufweisen, das Koaxialgetriebe weiters umfassend eine Hohlwelle mit Innenverzahnung, wobei in einer auf die Drehachse normal stehenden Ebene betrachtet die Kolben innerhalb der Hohlwelle angeordnet sind, das Koaxialgetriebe weiters umfassend eine Führungseinheit, wobei die Kolben jeweils in der Führungseinheit linear geführt und parallel zu einer normal auf die Drehachse stehenden Radialrichtung hin und her bewegbar sind, wodurch die Verzahnungen der ersten Stirnseiten der Kolben nacheinander in Eingriff mit der Innenverzahnung und in einen von der Innenverzahnung losgelösten Zustand bringbar sind, um während des jeweiligen Eingriffs, vorzugsweise unter flächigem Kontakt zwischen der jeweiligen Verzahnung und der Innenverzahnung, die Hohlwelle oder die Führungseinheit um die Drehachse weiter zu drehen.

### STAND DER TECHNIK

Aus der AT 521617 B1 ist ein Kurbelwellen- bzw. Koaxialgetriebe gemäß dem Oberbegriff des Anspruchs 1 bekannt, umfassend eine um eine Drehachse drehbare Kurbelwelle mit mindestens einem Pleuellager bzw. Hubzapfen, weiters umfassend mehrere, beispielsweise drei, Kolben, die mittels jeweils eines Pleuels mit dem mindestens einen Hubzapfen verbunden sind und jeweils an einer von der Drehachse weg weisenden ersten Stirnseite eine Verzahnung mit mindestens einem Zahn aufweisen, das Koaxialgetriebe weiters umfassend eine Hohlwelle mit Innenverzahnung, wobei in einer auf die Drehachse normal stehenden Ebene betrachtet die Kolben innerhalb der Hohlwelle angeordnet sind, das Koaxialgetriebe weiters umfassend eine Führungseinheit, wobei die Kolben jeweils in der Führungseinheit linear geführt und parallel zu einer normal auf die Drehachse stehenden Radialrichtung hin und her bewegbar sind, wodurch die Verzahnungen der ersten Stirnseiten der Kolben nacheinander in Eingriff mit der Innenverzahnung und in einen von der Innenverzahnung losgelösten Zustand bringbar sind, um während des jeweiligen Eingriffs unter flächigem Kontakt zwischen der jeweiligen Verzahnung und der Innenverzahnung die Hohlwelle oder die Führungseinheit um die Drehachse weiter zu drehen. Es lassen sich mit diesem Koaxialgetriebe hohe Drehmomente bei kleiner Baugröße übertragen, wobei ein hohes Übersetzungsverhältnis sowie eine hohe Genauigkeit bzw. Spielfreiheit erzielt werden kann. Um die Krafteinleitung möglichst homogen zu gestalten, ist eine erhöhte Anzahl von Kolben vorzusehen, was jedoch mit einer entsprechenden Zunahme einer parallel zur Drehachse gemessenen Baulänge des Koaxialgetriebes einhergeht, die sich je nach Anwendungsfall als nachteilig erweisen kann. Darüberhinaus steigt durch die erhöhte Anzahl von Bauteilen die Komplexität des Systems entsprechend, was im Hinblick auf Abweichungen durch Fertigungstoleranzen ebenfalls als nachteilig anzusehen ist.

### AUFGABE DER ERFINDUNG

Die Aufgabe der vorliegenden Erfindung ist es, ein verbessertes Koaxial- bzw. Kurbelwellengetriebe zur Verfügung zu stellen, das die oben genannten Nachteile überwindet.

### DARSTELLUNG DER ERFINDUNG

Zur Lösung der genannten Aufgabe ist es bei einem Koaxialgetriebe umfassend eine um eine Drehachse drehbare Kurbelwelle mit mindestens einem Hubzapfen, das Koaxialgetriebe weiters umfassend mindestens einen Kolbensatz, der mehrere, vorzugsweise mindestens drei, Kolben aufweist, die jeweils an einer von der Drehachse weg weisenden ersten Stirnseite eine Verzahnung mit mindestens einem Zahn aufweisen, das Koaxialgetriebe weiters umfassend eine Hohlwelle mit Innenverzahnung, wobei in einer auf die Drehachse normal stehenden Ebene betrachtet die Kolben innerhalb der Hohlwelle angeordnet sind, das Koaxialgetriebe weiters umfassend eine Führungseinheit, wobei die Kolben jeweils in der Führungseinheit linear geführt und parallel zu einer normal auf die Drehachse stehenden Radialrichtung hin und her bewegbar sind, wodurch die Verzahnungen der ersten Stirnseiten der Kolben nacheinander in Eingriff mit der Innenverzahnung und in einen von der Innenverzahnung losgelösten Zustand bringbar sind, um während des jeweiligen Eingriffs, vorzugsweise unter flächigem Kontakt zwischen der jeweiligen Verzahnung und der Innenverzahnung, die Hohlwelle oder die Führungseinheit um die Drehachse weiter zu drehen, erfindungsgemäß vorgesehen, dass zur Verbindung der Kolben des jeweiligen Kolbensatzes mit dem zumindest einen Hubzapfen jeweils ein gemeinsames, sternförmig ausgebildetes Pleuel, mit dem die Kolben des jeweiligen Kolbensatzes gekoppelt sind, vorgesehen ist, um einen Versatz der Kolben des jeweiligen Kolbensatzes relativ zueinander entlang der Drehachse vermeiden zu können.

D.h. pro Kolbensatz steht ein sternförmig ausgebildetes Pleuel, das im Folgenden auch als "Sternpleuel" bezeichnet wird, zur Verfügung. Eine weitere mögliche Bezeichnung für das sternförmig ausgebildete Pleuel wäre "Sternverbinder". Entsprechend sind unter "Kolbensatz" jene Kolben subsumiert, die mit dem gemeinsamen bzw. mit demselben Sternpleuel verbunden sind.

Für jedes Sternpleuel wiederum kann ein eigener Hubzapfen vorgesehen sein; theoretisch sind aber auch mehrere Sternpleuel pro Hubzapfen möglich, wodurch bei kompakter Dimensionierung des Koaxialgetriebes insgesamt noch mehr Kolben vorgesehen werden können, um die Gleichförmigkeit, die Drehmomentkapazität sowie die Kraftübertragung noch weiter zu erhöhen bzw. zu verbessern. Der jeweilige Hubzapfen kann auch als Kurbelzapfen bezeichnet werden.

Der Hubzapfen stellt einen Exzenter dar. Daher können im Rahmen der vorliegenden Erfindung auch Hubzapfen bzw. Exzenter einer Exzenterwelle gemeint sein. Folglich ist im Rahmen der vorliegenden Erfindung unter "Kurbelwelle" prinzipiell auch eine "Exzenterwelle" zu verstehen und umgekehrt - ungeachtet der Tatsache, dass Exzenterwellen üblicherweise austragend gelagert sind, wohingegen Kurbelwellen üblicherweise beidseitig gelagert sind.

Mittels einer Anordnung mehrerer Sternpleuel entlang der Drehachse gesehen hintereinander auf unterschiedlichen Hubzapfen lassen sich wiederum auf einfache Art und Weise andere bzw. niedrigere Übersetzungen erreichen.

Das Sternpleuel dient - wie jedes gewöhnliche, manchmal auch als "Schubstange" bezeichnete, Pleuel - der Umsetzung der Rotation der Kurbelwelle in die lineare Bewegung der Kolben, wobei sich das Sternpleuel - im Gegensatz zum einen Exzenter ausbildenden Hubzapfen - entsprechend nicht selbst relativ zur Führungseinheit in einer normal auf die Drehachse stehenden Ebene (um die Drehachse) dreht, sondern in dieser Ebene eine orbitale Bewegung durchführt. Besagte orbitale Bewegung in der normal auf die Drehachse stehenden Ebene rührt von der Exzentrizität her und kann als parallele Verschiebung relativ zur Führungseinheit angesehen werden, die bis zu einem gewissen Grad von einer Art Taumelbewegung überlagert ist.

Das Sternpleuel vermittelt dabei sowohl den "Vorhub", d.h. die Bewegung der Kolben in Richtung Innenverzahnung der Hohlwelle, als auch den sog. "Rückhub", d.h. die Bewegung der Kolben weg von der Innenverzahnung der Hohlwelle. Dass die Kolben mittels des Sternpleuels auch wieder zurückgeholt werden (Rückhub) kann als wesentlicher Vorteil gegenüber Lösungen ohne Pleuel angesehen werden. Dies ermöglicht insbesondere eine praktisch beliebige Einbaulage des Koaxialgetriebes, da keine Gefahr besteht, dass Kolben, die gerade nicht im Eingriff mit der Innenverzahnung sind, schwerkraftbedingt zurückfallen und so unplanmäßig erneut in Eingriff mit der Innenverzahnung kommen.

Zwar kann bei Lösungen mit Kurvenscheiben ebenfalls ein Zurückfallen verhindert werden, doch muss hierfür eine mehrfache Exzentrizität der Kurvenscheibe realisiert werden, wodurch sich ein von der Kreisform abweichender Querschnitt der Kurvenscheibe ergibt (Polygonität der Kurvenscheibe). Nachteilig hierbei ist, dass sich das mögliche Übersetzungsverhältnis reduziert (Übersetzungsverhältnis i=Zähnezahl/Polygonität; entsprechend ergibt sich eine Halbierung des Übersetzungsverhältnisses bei Polygonität 2, eine Reduktion auf ein Drittel bei Polygonität 3 usw.). D.h. das Sternpleuel behebt auch den Nachteil des reduzierten Übersetzungsverhältnisses.

Darüberhinaus findet beim erfindungsgemäßen Koaxialgetriebe auch kein Abgleiten einer Kurvenscheibe an einer der Kurvenscheibe zugewandten Gleitfläche des jeweiligen Kolbens statt. Dies ist ebenfalls vorteilhaft, da es zur Optimierung des Abgleitens üblicherweise notwendig ist, die Gleitfläche der Kolben stark abgerundet zu gestalten, was wiederum als Einschränkung anzusehen ist, die beim erfindungsgemäßen Koaxialgetriebe eben nicht notwendig ist.

Indem nur ein einziges, sternförmig ausgebildetes Pleuel für sämtliche Kolben eines Kolbensatzes vorgesehen ist, kann eine parallel zur Drehachse gemessene Baulänge des Koaxial- bzw. Kurbelwellengetriebes dramatisch reduziert werden, weil die Kolben entlang der Drehachse gesehen im Wesentlichen versatzfrei zueinander angeordnet werden können. Theoretisch ist es natürlich nicht ausgeschlossen, dass ein gewisser Versatz gegeben ist, der z.B. aufgrund von Fertigungstoleranzen gegeben ist. Darüberhinaus könnte auch ein geringfügiger Versatz planmäßig vorgesehen sein, z.B. wiederum aus Gründen der Fertigung.

Jedenfalls wird die Anzahl der Bauteile entsprechend reduziert, weil nicht für jeden Kolben ein eigenes Pleuel vorgesehen werden muss, was die Komplexität des Systems herabsetzt und sich somit vorteilhaft im Hinblick auf Abweichungen durch Fertigungstoleranzen auswirkt.

Indem also problemlos eine hohe Anzahl von Kolben verwendet werden kann, ist einerseits eine besonders homogene Krafteinleitung möglich und können andererseits extrem hohe Drehmomente übertragen werden.

Weiters gilt auch das Folgende für das erfindungsgemäße Koaxialgetriebe bzw. Kurbelwellengetriebe:
Die Kurbelwelle stellt ein Antriebselement dar bzw. kann als Antriebselement bezeichnet werden.

Vorzugsweise ist in einer auf die Drehachse normal stehenden Ebene betrachtet die Kurbelwelle zumindest abschnittsweise innerhalb der Hohlwelle angeordnet.

Die Hohlwelle ist vorzugsweise um die Drehachse drehbar gelagert und kann als Abtriebselement fungieren.

Alternativ kann bei fixierter Hohlwelle die Führungseinheit als Abtriebselement fungieren, wofür die Führungseinheit drehbar gelagert sein muss.

Um die Hohlwelle oder ggf. die Führungseinheit in einer bestimmten Richtung weiterdrehen zu können, sind bevorzugt mindestens drei Kolben vorgesehen. Beispielsweise kann ein ganzzahliges Vielfaches N von drei gewählt werden, beispielsweise neun (d.h. für N=3) - die genaue Anzahl unterliegt prinzipiell aber keiner Einschränkung und braucht entsprechend kein ganzzahliges Vielfaches von drei zu sein. Die genaue Anzahl kann an den jeweiligen Anwendungsfall angepasst werden, insbesondere im Hinblick auf den gewünschten Wirkungsgrad sowie auf die Systemvorspannung, welche für das Anfahrmoment des Koaxialgetriebes wichtig ist.

Das Weiterdrehen wird durch das, insbesondere flächige, Pressen der Verzahnung der ersten Stirnseite von zumindest einem Kolben gegen die Innenverzahnung der Hohlwelle bewirkt, während die anderen Kolben kaum eine oder keine Presskraft auf die Innenverzahnung ausüben.

Das Verhalten der Kolben im Hinblick darauf, wieviele Kolben wann und wie stark in Eingriff mit der Innenverzahnung stehen, lässt sich sehr variabel auslegen. Bei 3N Kolben kann z.B. vorgesehen sein, dass N Kolben in Eingriff mit der Innenverzahnung sind und gegen diese pressen. Die restlichen 2N Kolben üben währenddessen keine oder nur eine geringe Presskraft auf die Innenverzahnung aus. Vorzugsweise ist dabei zumindest 1N der restlichen 2N Kolben teilweise in Eingriff mit der Innenverzahnung, um Spielfreiheit zu erzeugen. Vorzugsweise berührt dabei zumindest einer der restlichen Kolben die Innenverzahnung überhaupt nicht.

Es sei bemerkt, dass durch entsprechende Auslegung des erfindungsgemäßen Koaxialgetriebes die genaue Anzahl der in Eingriff bzw. in teilweisem Eingriff mit der Innenverzahnung stehenden Kolben praktisch beliebig variiert werden kann, um Spielfreiheit zu gewährleisten.

Generell kann bei mehreren Kolben durch den gleichzeitigen, zumindest teilweisen Eingriff von mindestens zwei Kolben mit der Innenverzahnung Spielfreiheit sichergestellt werden, wobei vorzugsweise von den genannten zwei Kolben sich einer im Vorhub befindet und der andere im Rückhub.

Ein sehr großes Übersetzungsverhältnis ergibt sich durch diese Wirkungsweise.

Wie geschildert, ist ein flächiger Kontakt zwischen der Verzahnung der jeweiligen ersten Stirnseite mit der Innenverzahnung der Hohlwelle möglich. Voraussetzung hierfür ist die lineare Bewegung der Kolben. Darüberhinaus können die Verzahnungen und die Innenverzahnung entsprechend geometrisch ausgelegt bzw. optimiert werden, um das Pressen bzw. den flächigen Kontakt - und damit die Übertragung hoher Drehmomente - weiter zu steigern. Durch das flächige Pressen bzw. den flächigen Kontakt zwischen der Verzahnung der jeweiligen ersten Stirnseite mit der Innenverzahnung der Hohlwelle können - im Gegensatz zu aus dem Stand der Technik bekannten Lösungen mit Linienkontakt bzw. linienförmigem Eingriff - vergleichsweise sehr hohe Drehmomente von der Kurbelwelle auf die Hohlwelle oder ggf. die Führungseinheit übertragen werden. Weiters wird durch das flächige Pressen bzw. den flächigen Kontakt die Hertzsche Pressung vermindert, wodurch sich die Standzeit verlängert.

Es sei bemerkt, dass die Geometrie der Verzahnungen bzw. der Innenverzahnung auch beim vorliegenden Koaxialgetriebe so ausgelegt werden kann, dass es trotz linearer Bewegung der Kolben zu einem Linienkontakt kommt, was vorteilhaft sein kann, wenn eine Verminderung der Reibung (und damit eine Erhöhung des Wirkungsgrads) gewünscht ist.

Durch die bequeme Möglichkeit der Erhöhung der Anzahl der Kolben ergibt sich auch in diesem Fall eine weitere Steigerungsmöglichkeit, was die Höhe der übertragbaren Drehmomente anbelangt.

Mit mindestens drei Kolben kann sichergestellt werden, dass der nächste Kolben, der mit der Verzahnung seiner ersten Stirnseite gegen die Innenverzahnung, insbesondere flächig, presst, die Hohlwelle oder ggf. die Führungseinheit nicht in die Gegenrichtung zurückdreht und es bloß zu einem Hin- und Herpendeln der Hohlwelle oder ggf. der Führungseinheit um die Drehachse kommt. Ein solcher Fall ist bei zwei Kolben hingegen grundsätzlich nicht auszuschließen, doch kann bei zwei Kolben ein zusätzliches Element, z.B. eine Art Hemmung bzw. ein Freilauf, vorgesehen sein, das bzw. der das Drehen der Hohlwelle oder ggf. der Führungseinheit nur in einer bestimmten Richtung gestattet, wodurch ein Weiterdrehen der Hohlwelle oder ggf. der Führungseinheit auch mit nur zwei Kolben ermöglicht wird.

Die Verzahnung der ersten Stirnseiten kann auch als auf der ersten Stirnseite aufgeprägte Verzahnung bezeichnet werden. Der jeweilige Kolben könnte entsprechend auch als "Zahnelement" bezeichnet werden.

Die Führungseinheit kann einstückig oder aus mehreren Elementen zusammengesetzt aufgebaut sein.

Aufgrund der linearen Führung der Kolben in der Führungseinheit bewegen sich die Kolben entsprechend nur linear parallel zur jeweiligen Radialrichtung, wobei die dem jeweiligen Kolben zugeordnete Radialrichtung durch die Führungseinheit definiert wird.

Die linearen Führungen können insbesondere durch Hohlzylinder in der Führungseinheit ausgebildet sein, in denen die Kolben angeordnet sind. In diesem Fall wird die dem jeweiligen Kolben zugeordnete Radialrichtung durch die jeweilige Zylinderachse definiert. Typischerweise weisen die Kolben dabei eine im Wesentlichen kreisförmige Querschnittsfläche (normal auf die jeweilige Radialrichtung stehend) auf. Grundsätzlich sind aber auch andere Querschnittsformen der Kolben möglich, beispielsweise rechteckige oder langlochförmige Querschnittsflächen, insbesondere um die "Tiefe" der Verzahnung (d.h. deren Dimensionierung parallel zur Drehachse) und damit die übertragbaren Kräfte erhöhen zu können. Es sei nochmals bemerkt, dass Fälle möglich sind, bei denen die Führungseinheit nicht fest ist, sondern rotieren kann. Entsprechend ändern sich dann die den Kolben zugeordneten Radialrichtungen durch die Rotation der Führungseinheit bzw. existieren mathematisch streng genommen dann über einen Zeitraum betrachtet, in welchem sich die Führungseinheit dreht, unendlich viele Radialrichtungen.

Darüberhinaus ist das Koaxialgetriebe durch die hohe Übersetzung und Reibung im Zahnkontakt grundsätzlich auch selbsthemmend im Falle eines Antriebsausfalles. Insbesondere lässt sich das Koaxialgetriebe durch ein Verbleiben eines der Kolben im oberen Totpunkt, also bei maximalem Verschub des Kolbens in der jeweiligen Radialrichtung von der Drehachse weg, sperren, wodurch die Funktionalität einer Bremse realisiert werden kann. Lösungen ohne Pleuel erlauben ein solches Sperren üblicherweise nicht.

Ein weiterer Vorteil des Koaxialgetriebes besteht darin, dass eine hohe Dynamik ermöglicht wird, weil der mindestens eine Hubzapfen der Kurbelwelle eine kreisförmige Bewegung um die Drehachse beschreibt und vorzugsweise selbst einen kreisförmigen Querschnitt senkrecht auf die Drehachse aufweist, sodass ein Massenausgleich sehr einfach realisiert werden kann, beispielsweise in an sich bekannter Weise mittels Ausgleichsgewichten oder Bohrungen auf der Kurbelwelle.

Bei einer bevorzugten Ausführungsform des erfindungsgemäßen Koaxialgetriebes ist vorgesehen, dass mehrere Kolbensätze vorgesehen sind, wobei für jeden Kolbensatz jeweils ein gemeinsames, sternförmig ausgebildetes Pleuel vorgesehen ist, mit dem die Kolben des jeweiligen Kolbensatzes gekoppelt sind. Sowohl die Homogenität der Krafteinleitung als auch die Größe der übertragbaren Drehmomente kann hierdurch nochmals gesteigert werden, ohne dass die Baulänge übermäßig erhöht werden muss.

Um eine gegenüber der oben geschilderten orbitalen Bewegung hinausgehende (Ver-)Drehung des Sternpleuels gegenüber der Führungseinheit auf konstruktiv besonders einfache Art und Weise auszuschließen, ist es bei einer bevorzugten Ausführungsform des erfindungsgemäßen Koaxialgetriebes vorgesehen, dass zur Sicherung einer orbitalen Bewegung und gegen ein darüberhinausgehendes Verdrehen relativ zur Führungseinheit des jeweiligen, sternförmig ausgebildeten Pleuels mindestens zwei Führungsbolzen vorgesehen sind, die mit dem jeweiligen, sternförmig ausgebildeten Pleuel starr verbunden sind und mit zumindest einer korrespondierenden Ausnehmung zumindest eines Führungsabschnitts, der unbeweglich zur Führungseinheit angeordnet ist, in Eingriff stehen.

Vorzugsweise ist jedem Führungsbolzen jeweils eine korrespondierende Ausnehmung zugeordnet.

Der zumindest eine Führungsabschnitt kann ein von der Führungseinheit grundsätzlich separater Teil sein. Alternativ kann der zumindest eine Führungsabschnitt ein Teil der Führungseinheit sein und/oder kann einstückig mit der Führungseinheit ausgebildet sein.

Dabei können die mindestens zwei Führungsbolzen, in einer auf die Drehachse normal stehenden Ebene betrachtet, innerhalb der Führungseinheit angeordnet sein, was eine besonders kompakte Anordnung ergibt.

Die Dimensionierung der zumindest einen korrespondierenden Ausnehmung kann natürlich auf die Exzentrizität des Hubzapfens bzw. der Kurbel angepasst sein. Beispielsweise kann, wenn für jeden Führungsbolzen jeweils eine korrespondierende Ausnehmung vorgesehen ist, die jeweilige korrespondierende Ausnehmung als Bohrung mit entsprechend angepasstem Durchmesser ausgeführt sein, insbesondere indem die Größe des Bohrungsdurchmessers gleich dem Zweifachen der Exzentrizität plus Durchmesser des Führungsbolzens gewählt wird. Entsprechend steht dann der jeweilige Führungsbolzen immer tangential in Kontakt mit der zugehörigen Ausnehmung bzw. dem Führungsabschnitt.

Um Reibungsverluste zwischen Führungsbolzen und Ausnehmung bzw. Führungsabschnitt zu minimieren, ist es bei einer besonders bevorzugten Ausführungsform des erfindungsgemäßen Koaxialgetriebes vorgesehen, dass an den Führungsbolzen Rollen vorgesehen sind, um bei einer Bewegung der Führungsbolzen in der mindestens einen korrespondierenden Ausnehmung ein Abwälzen am zumindest einen Führungsabschnitt zu erleichtern. D.h. der jeweilige Führungsbolzen gleitet nicht am Führungsabschnitt ab, sondern rollt mittels einer oder mehrerer Rollen auf dem zumindest einen Führungsabschnitt ab.

Die Kopplung zwischen Kolben und Sternpleuel kann grundsätzlich auf unterschiedlichste Art und Weise erfolgen. Um eine konstruktiv besonders einfache Kopplung zu realisieren, ist es bei einer bevorzugten Ausführungsform des erfindungsgemäßen Koaxialgetriebes vorgesehen, dass zur Kopplung der Kolben des jeweiligen Kolbensatzes mit dem zugehörigen sternförmig ausgebildeten Pleuel in den Kolben Langlöcher vorgesehen sind, die quer zur jeweiligen Radialrichtung verlaufen, wobei am sternförmig ausgebildeten Pleuel Kopplungsbolzen befestigt sind, die mit den Langlöchern in Eingriff stehen.

Diese Art der Kopplung erweist sich als besonders platzsparend, sodass die Kurbelwelle einen entsprechend großen Durchmesser aufweisen kann, was nicht nur im Hinblick auf die mechanische Stabilität vorteilhaft ist, sondern bei hohler Ausführung der Kurbelwelle auch besonders viel Platz für die, insbesondere verdrehungsfreie, Durchführung von Kabeln oder dergleichen erlaubt.

Vorzugsweise verlaufen die Langlöcher normal zu den Radialrichtungen der jeweiligen Kolben. Es wäre aber auch denkbar, dass der Verlauf des jeweiligen Langlochs nicht gerade ist, sondern eine Krümmung aufweist.

Vorzugsweise verlaufen die Kopplungsbolzen bzw. deren Längsachsen parallel zur Drehachse.

Die Kopplungsbolzen sind in den Langlöchern der Kolben angeordnet, wodurch der Eingriff realisiert ist. Die Bewegung der Kolben erfolgt somit nach dem Prinzip einer Kurbelschleife.

Bei einer besonders bevorzugten Ausführungsform des erfindungsgemäßen Koaxialgetriebes ist vorgesehen, dass zumindest einer der Kopplungsbolzen auch zumindest einen Führungsbolzen ausbildet. Die Anzahl der Teile wird hierdurch weiter reduziert, was Platz, Gewicht und Kosten spart. Bevorzugt bilden zumindest zwei der Kopplungsbolzen die zumindest zwei Führungsbolzen aus. Besonders bevorzugt sind sämtliche Führungsbolzen durch Kopplungsbolzen ausgebildet.

Um eine alternative Art der Kopplung zwischen Kolben und Sternpleuel zu realisieren, die konstruktiv einfach ist, ist es bei einer bevorzugten Ausführungsform des erfindungsgemäßen Koaxialgetriebes vorgesehen, dass zur Kopplung der Kolben des jeweiligen Kolbensatzes mit dem zugehörigen sternförmig ausgebildeten Pleuel Zwischenglieder vorgesehen sind, die im Wesentlichen starr ausgeführt sind, wobei jedes Zwischenglied einerseits mit dem zugehörigen Kolben gelenkig verbunden ist und andererseits mit dem sternförmig ausgebildeten Pleuel gelenkig verbunden ist. Hierdurch lässt sich eine Bewegung des Sternpleuels mit besonders geringer Reibung verwirklichen, sodass Leistungsverluste minimiert werden.

Die gelenkige Verbindung zwischen dem jeweiligen Zwischenglied und dem zugehörigen Kolben kann z.B. in an sich bekannter Weise mittels eines Drehgelenks oder eines Festkörpergelenks realisiert sein. Auch zur gelenkigen Verbindung zwischen dem jeweiligen Zwischenglied und dem zugehörigen, sternförmig ausgebildeten Pleuel kann beispielsweise jeweils ein Drehgelenk oder ein Festkörpergelenk vorgesehen sein.

Bei einer besonders bevorzugten Ausführungsform des erfindungsgemäßen Koaxialgetriebes ist vorgesehen, dass zur gelenkigen Verbindung zwischen dem jeweiligen Zwischenglied und dem zugehörigen, sternförmig ausgebildeten Pleuel Verbindungsbolzen vorgesehen sind, wobei zumindest einer der Verbindungsbolzen auch einen Führungsbolzen ausbildet. Die Anzahl der Teile wird hierdurch reduziert, was Platz, Gewicht und Kosten spart. Bevorzugt bilden zumindest zwei der Verbindungsbolzen die zumindest zwei Führungsbolzen aus. Besonders bevorzugt sind sämtliche Führungsbolzen durch Verbindungsbolzen ausgebildet.

Um die Größe der übertragbaren Drehmomente weiter zu steigern, ist es bei einer bevorzugten Ausführungsform des erfindungsgemäßen Koaxialgetriebes vorgesehen, dass die Verzahnungen der ersten Stirnseiten jeweils mehrere, vorzugsweise drei, Zähne aufweisen. Mit der Anzahl der Zähne der Verzahnungen der ersten Stirnseiten wird die Fläche vergrößert, mit der der jeweilige Kolben gegen die Innenverzahnung pressen kann, was die Übertragung von besonders großen Drehmomenten zwischen Kurbelwelle und Hohlwelle oder ggf. Führungseinheit ermöglicht.

Bei einer bevorzugten Ausführungsform des erfindungsgemäßen Koaxialgetriebes ist vorgesehen, dass die Kurbelwelle hohl ausgeführt ist, um Kabel verdrehungsfrei durch die Kurbelwelle, vorzugsweise entlang der Drehachse, führen zu können.

Bei einer bevorzugten Ausführungsform des erfindungsgemäßen Koaxialgetriebes ist vorgesehen, dass die Kolben jeweils auf einer der ersten Stirnseite gegenüberliegenden zweiten Stirnseite eine Verzahnung mit mindestens einem Zahn aufweisen, dass ein um die Drehachse drehbar gelagerter Innenring mit Außenverzahnung vorgesehen ist, wobei die Führungseinheit zumindest abschnittsweise zwischen dem Innenring und der Hohlwelle angeordnet ist, wobei die Verzahnungen der zweiten Stirnseiten der Kolben nacheinander in Eingriff mit der Außenverzahnung und in einen von der Außenverzahnung losgelösten Zustand bringbar sind, um während des jeweiligen Eingriffs, vorzugsweise unter flächigem Kontakt zwischen der jeweiligen Verzahnung und der Außenverzahnung, den Innenring oder die Führungseinheit um die Drehachse weiter zu drehen.

Die Verzahnung der zweiten Stirnseiten kann auch als auf der zweiten Stirnseite aufgeprägte Verzahnung bezeichnet werden.

Vorzugsweise ist der Innenring um die Drehachse drehbar gelagert und hat, sofern er nicht gesperrt ist, im Prinzip die Funktion einer Welle und könnte daher auch als Innenwelle bezeichnet werden. Dessen Außenverzahnung weist zur Innenverzahnung der Hohlwelle.

Es gilt im Prinzip das zum Eingriff der Verzahnung der ersten Stirnseiten in die Innenverzahnung der Hohlwelle Gesagte analog für den Eingriff der Verzahnung der zweiten Stirnseiten in die Außenverzahnung des Innenrings, weshalb grundsätzlich auf das Oben Gesagte verwiesen wird. Insbesondere können bei flächigem Kontakt bzw. flächigem Pressen zwischen der Verzahnung der zweiten Stirnseite des jeweiligen Kolbens und der Außenverzahnung des Innenrings- im Gegensatz zu Lösungen mit linienförmigem Kontakt - besonders hohe Drehmomente zwischen Kurbelwelle und Innenring oder ggf. Führungseinheit übertragen werden.

Weiters können jeweils mehrere, insbesondere drei, Zähne bei den Verzahnungen der zweiten Stirnseiten vorgesehen sein, um besonders große Drehmomente zwischen der Kurbelwelle und dem Innenring oder ggf. der Führungseinheit zu übertragen.

Bei gebremster oder fixierter Führungseinheit treibt ein bzw. jeder Kolben abwechselnd die Hohlwelle und den Innenring an. Es können sowohl der Innenring als auch die Hohlwelle als Abtrieb fungieren. Es kann auch nur die Hohlwelle oder der Innenring als Abtrieb fungieren, wobei das jeweils andere Element gebremst oder gesperrt wird.

Da der Innenring einen kleineren Durchmesser als die Hohlwelle hat, können an diesem bei gleichen Winkelgeschwindigkeiten geringere Tangentialgeschwindigkeiten erzielt bzw. abgegriffen werden. D.h. durch den Innenring und die Hohlwelle können gleichzeitig zwei Abtriebe für unterschiedliche Geschwindigkeiten zur Verfügung gestellt werden, wodurch je nach Anwendungsfall ggf. ein zweites Getriebe eingespart werden kann.

Der Innenring kann, muss aber nicht, mit der Hohlwelle drehfest verbunden sein, wobei sich bei einer Verbindung einerseits eine höhere Auflösung des Koaxialgetriebes erreichen lässt und andererseits die Übertragung von noch größeren Drehmomenten.

Weiters sind theoretisch auch Ausführungsvarianten mit nur zwei Kolben denkbar, bei denen mittels des Innenrings aufgrund der insgesamt vier (Kolben-)Eingriffe sichergestellt wird, dass die Hohlwelle oder ggf. die Führungseinheit nur in eine bestimmte Richtung weiterbewegt wird.

Schließlich ist es auch möglich, dass der Innenring in die entgegengesetzte Richtung gedreht wird im Vergleich zur Drehrichtung der Hohlwelle.

Bei einer bevorzugten Ausführungsform des erfindungsgemäßen Koaxialgetriebes ist vorgesehen, dass die Führungseinheit unbeweglich zur Drehachse angeordnet ist. In diesem Fall wird die Hohlwelle weiterbewegt und fungiert als Abtriebselement. Ggf. kann bei solchen Ausführungsvarianten auch der Innenring (falls vorhanden) weiterbewegt werden, der wiederum gebremst sein kann oder als Abtriebselement fungieren kann.

Wie oben bereits erwähnt, lassen sich mittels einer Anordnung mehrerer Sternpleuel entlang der Drehachse gesehen hintereinander auf unterschiedlichen Hubzapfen auf einfache Art und Weise andere bzw. sehr hohe Übersetzungsverhältnisse erreichen. Entsprechend ist es bei einer bevorzugten Ausführungsform des erfindungsgemäßen Koaxialgetriebes vorgesehen, dass bezogen auf Drehbewegungen um die Drehachse die Hohlwelle gesperrt oder gebremst ist, dass ein weiterer Hubzapfen vorgesehen ist, dass ein weiterer Kolbensatz mit mehreren Kolben vorgesehen ist, die jeweils an einer von der Drehachse weg weisenden ersten Stirnseite eine Verzahnung mit mindestens einem Zahn aufweisen, dass zur Verbindung der Kolben des weiteren Kolbensatzes mit dem weiteren Hubzapfen ein weiteres sternförmig ausgebildetes Pleuel vorgesehen ist, mit dem die Kolben des weiteren Kolbensatzes gekoppelt sind, dass eine weitere Hohlwelle mit Innenverzahnung vorgesehen ist, wobei in einer auf die Drehachse normal stehenden Ebene betrachtet zumindest die Innenverzahnung der weiteren Hohlwelle, vorzugsweise die gesamte weitere Hohlwelle, innerhalb des Querschnitts der Hohlwelle angeordnet ist, und dass die Kolben des weiteren Kolbensatzes jeweils in der Führungseinheit linear geführt und parallel zur Radialrichtung hin und her bewegbar sind, wodurch bei Drehung der Führungseinheit um die Drehachse die Verzahnungen der ersten Stirnseiten der Kolben des weiteren Kolbensatzes nacheinander in Eingriff mit der Innenverzahnung der weiteren Hohlwelle und in einen von der Innenverzahnung der weiteren Hohlwelle losgelösten Zustand bringbar sind, um während des jeweiligen Eingriffs, vorzugsweise unter flächigem Kontakt zwischen der jeweiligen Verzahnung und der Innenverzahnung der weiteren Hohlwelle, die weitere Hohlwelle um die Drehachse weiter zu drehen.

Bei dieser Ausführungsform ist die Führungseinheit nicht unbeweglich zur Drehachse angeordnet bzw. gesperrt oder gebremst, sondern die Hohlwelle.

Der Abtrieb erfolgt an der weiteren Hohlwelle.

Die Führungseinheit führt dabei sowohl die Kolben des zumindest einen Kolbensatzes als auch die Kolben des weiteren Kolbensatzes.

Der zumindest eine Hubzapfen und der weitere Hubzapfen bzw. weitere Exzenter sind entlang der Drehachse gesehen hintereinander angeordnet, wobei der zumindest eine Hubzapfen und der weitere Hubzapfen nicht notwendigerweise unmittelbar aufeinander folgen bzw. unmittelbar aneinander anschließen müssen. D.h. es kann auch ein Abstand zwischen diesen Hubzapfen vorgesehen sein.

Selbstverständlich ist es möglich, dass mehrere weitere Hubzapfen, mehrere weitere Kolbensätze, mehrere weitere sternförmig ausgebildete Pleuel und auch mehrere weitere Hohlwellen vorgesehen sind, wobei diese typischerweise entlang der Drehachse gesehen jeweils hintereinander angeordnet sind.

Bei der resultierenden zwei- oder mehrstufige Ausführungsform des Koaxialgetriebes wird zum einen eine vergleichsweise höhere Anzahl an Zähnen an der Leistungsübertragung beteiligt, wodurch noch größere Drehmomente übertragen werden können. Zum anderen lassen sich vergleichsweise höhere Übersetzungsverhältnisse, insbesondere ins Langsame, realisieren.

Die Gesamtübersetzung i berechnet sich dabei aus der Zähnezahl zf der fixen bzw. gebremsten Stufe, d.h. aus der Zähnezahl der Innenverzahnung der Hohlwelle, und der Zähnezahl za der Abtriebsstufe, d.h. aus der Zähnezahl der Innenverzahnung der weiteren Hohlwelle, gemäß i=za*(zf-1)/(za-zf). Wenn beispielsweise die Innenverzahnung der Hohlwelle 42 Zähne aufweist und die Innenverzahnung der weiteren Hohlwelle 41 Zähne, so ergibt sich eine Gesamtübersetzung i=-1681, also eine sehr große Übersetzung ins Langsame (umgangssprachlich auch als Untersetzung bezeichnet), da |i| >> 1 gilt. Das negative Vorzeichen gibt an, dass sich die Führungseinheit und die weitere Hohlwelle in entgegengesetzte Richtungen drehen.

Entsprechend ist es zur Realisierung einer großen Bandbreite von Übersetzungen und insbesondere zur Realisierung von hohen Übersetzungen bei einer besonders bevorzugten Ausführungsform des erfindungsgemäßen Koaxialgetriebes vorgesehen, dass die Innenverzahnung der Hohlwelle und die Innenverzahnung der weiteren Hohlwelle eine unterschiedliche Anzahl an Zähnen aufweisen.

Grundsätzlich können die Exzentrizitäten des zumindest einen Hubzapfens und des weiteren Hubzapfens unterschiedlich groß sein. Bei einer besonders bevorzugten Ausführungsform des erfindungsgemäßen Koaxialgetriebes ist vorgesehen, dass der mindestens eine Hubzapfen und der weitere Hubzapfen die gleiche Exzentrizität aufweisen. Dies erweist sich vorteilhaft im Hinblick auf einen guten Massenausgleich.

Ebenso erweist sich ein gewisser Hubzapfenversatz ungleich null als günstig im Hinblick auf einen guten Massenausgleich. Bei einer besonders bevorzugten Ausführungsform des erfindungsgemäßen Koaxialgetriebes ist daher vorgesehen, dass der mindestens eine Hubzapfen und der weitere Hubzapfen bezogen auf die Drehachse verdreht zueinander angeordnet sind, vorzugsweise um 360°/h, wobei h die Gesamtanzahl aller Hubzapfen ist.

Ein Hubzapfenversatz von 360°/h erweist sich im Hinblick auf den Massenausgleich als optimal, wobei h die Summe aus der Anzahl des mindestens einen Hubzapfens und des weiteren Hubzapfens ist. Wenn also bei der genannten Ausführungsform des Koaxialgetriebes z.B. genau ein Hubzapfen und genau ein weiterer Hubzapfen vorgesehen sind, ergibt sich mit h=2 ein Hubzapfenversatz von 360°/2 = 180° zwischen dem Hubzapfen und dem weiteren Hubzapfen.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische Schnittansicht eines ersten Ausführungsbeispiels eines erfindungsgemäßen Koaxialgetriebes
- Fig. 2: eine schematische Schnittansicht eines zweiten Ausführungsbeispiels des erfindungsgemäßen Koaxialgetriebes
- Fig. 3: eine schematische Schnittansicht des zweiten Ausführungsbeispiels des erfindungsgemäßen Koaxialgetriebes, in der ein Führungsabschnitt erkennbar ist
- Fig. 4: eine schematische Schnitt- bzw. Stirnseitenansicht eines dritten Ausführungsbeispiels des erfindungsgemäßen Koaxialgetriebes
- Fig. 5: eine schematische Schnittansicht des dritten Ausführungsbeispiels gemäß der Schnittlinie V-V in Fig. 4, wobei Pfeile die Blickrichtung andeuten
- Fig. 6: eine schematische Schnittansicht des dritten Ausführungsbeispiels gemäß der Schnittlinie VI-VI in Fig. 5, wobei Pfeile die Blickrichtung andeuten

### WEGE ZUR AUSFÜHRUNG DER ERFINDUNG

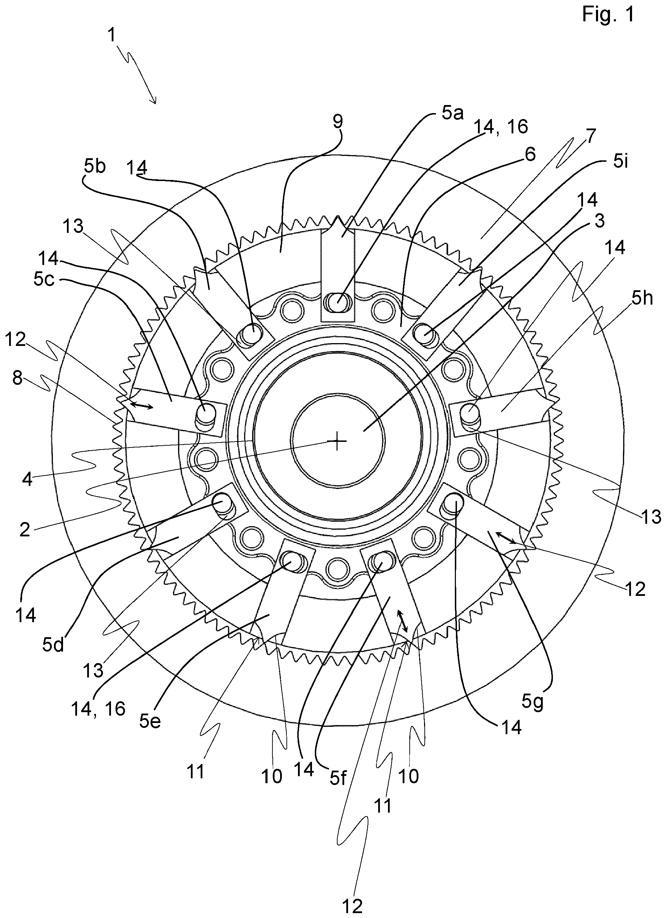

In der Schnittansicht der Fig. 1 ist ein erstes Ausführungsbeispiel eines erfindungsgemäßen Koaxialgetriebes 1 dargestellt. Das Koaxialgetriebe 1 weist eine Kurbelwelle 3 auf, die um eine Drehachse 2 drehbar ist und einen Hubzapfen 4 aufweist, der in Fig. 1 erkennbar ist und einen Exzenter ausbildet, der sich bei Drehung der Kurbelwelle 3 um die Drehachse 2 dreht.

Das Koaxialgetriebe 1 des ersten Ausführungsbeispiels weist weiters einen Kolbensatz mit neun Kolben 5a-i auf. Jeder dieser Kolben 5a-i weist an einer von der Drehachse 2 weg weisenden ersten Stirnseite 10 eine aufgeprägte Verzahnung 11 mit einem Zahn auf.

Weiters ist beim Koaxialgetriebe 1 eine Hohlwelle 7 vorgesehen, die eine Innenverzahnung 8 aufweist. In der Bildebene der Fig. 1, die senkrecht auf die Drehachse 2 steht, sind die Kolben 5a-i - und zumindest abschnittsweise die Kurbelwelle 3 - innerhalb der Hohlwelle 7 angeordnet. Dies gilt auch für eine Führungseinheit 9, in welcher die Kolben 5a-i jeweils linear geführt und jeweils parallel zu einer normal auf die Drehachse 2 stehenden Radialrichtung 12 hin und her bewegbar sind. Hierzu weist die Führungseinheit 9 in den dargestellten Ausführungsbeispielen Hohlzylinder auf, die als lineare Führungen für die Kolben 5a-i fungieren. Die Kolben 5a-i weisen in Abschnitten, die in den Hohlzylindern der Führungseinheit 9 angeordnet sind, einen kreisförmigen Querschnitt auf, wobei der jeweilige Querschnitt in einer Ebene normal zur jeweiligen Radialrichtung 12 liegt.

Durch das Hin- und Herbewegen der Kolben 5a-i werden die Verzahnungen 11 der ersten Stirnseiten 10 der Kolben 5a-i nacheinander in Eingriff mit der Innenverzahnung 8 und in einen von der Innenverzahnung 8 losgelösten Zustand gebracht, wobei aufgrund der linearen Bewegung der Kolben 5a-i während des jeweiligen Eingriffs ein flächiger Kontakt zwischen der jeweiligen Verzahnung 11 und der Innenverzahnung 8 sichergestellt werden kann und die jeweilige Verzahnung 11 flächig gegen die Innenverzahnung 8 presst. Hierdurch wird die Hohlwelle 7 ein Stück weiter um die Drehachse 2 gedreht, wenn die Führungseinheit 9 unbeweglich zur Drehachse 2 angeordnet ist oder wenn die Führungseinheit 9 zwar um die Drehachse 2 drehbar angeordnet ist, aber gebremst ist. Wenn hingegen die Hohlwelle 7 fixiert bzw. unbeweglich zur Drehachse 2 ist oder gebremst ist, wird die (um die Drehachse 2 drehbar gelagerte) Führungseinheit 9 ein Stück weiter gedreht. Aufgrund des flächigen Eingreifens bzw. Pressens können sehr hohe Drehmomente von der Kurbelwelle 3 auf die Hohlwelle 7 oder ggf. die Führungseinheit 9 übertragen werden.

Vorzugsweise ist bei den in den Figuren 1-3 dargestellten Ausführungsbeispielen die Führungseinheit unbeweglich zur Drehachse 2 angeordnet, sodass bei Drehung der Kurbelwelle 3 die Hohlwelle 7 bewegt wird.

Zur Verbindung der Kolben 5a-i des Kolbensatzes mit dem Hubzapfen 4 ist erfindungsgemäß ein gemeinsames, sternförmig ausgebildetes Pleuel 6 vorgesehen, mit dem die Kolben 5a-i gekoppelt sind. Hierdurch ergibt sich in den dargestellten Ausführungsbeispielen, bezogen auf die Drehachse 2, eine im Wesentlichen versatzfreie Anordnung der Kolben 5a-i zueinander, woraus - trotz der relativ hohen Anzahl an Kolben 5a-i - eine extrem kleine, parallel zur Drehachse 2 gemessene Baulänge des Koaxialgetriebes 1 resultiert. Gleichzeitig wird durch die relativ hohe Anzahl an Kolben 5a-i eine sehr homogene Krafteinleitung realisiert und können zudem extrem hohe Drehmomente übertragen werden.

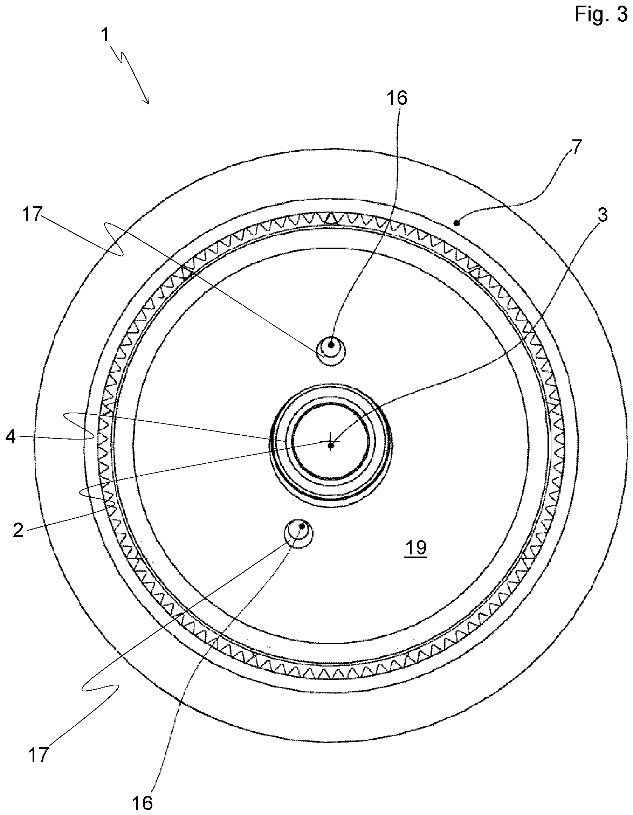

Zur Sicherung einer orbitalen Bewegung und gegen ein darüberhinausgehendes Verdrehen relativ zur Führungseinheit 9 des sternförmig ausgebildeten Pleuels 6 sind in den in den Figuren 1-3 dargestellten Ausführungsbeispielen jeweils zwei Führungsbolzen 16 vorgesehen, die mit dem sternförmig ausgebildeten Pleuel 6 starr verbunden sind und von diesem parallel zur Drehachse 2 verlaufend abstehen. Die Führungsbolzen 16, insbesondere freie Enden aufweisende Abschnitte der Führungsbolzen 16, sind dabei mit korrespondierenden Ausnehmungen 17 eines Führungsabschnitts 19 in Eingriff bzw. abschnittsweise in den Ausnehmungen 17 angeordnet, vgl. Fig. 3, wobei der Führungsabschnitt 19 unbeweglich zur Führungseinheit 9 angeordnet bzw. mit dieser verbunden ist. In den dargestellten Ausführungsbeispielen sind die korrespondierenden Ausnehmungen 17 als Bohrungen ausgeführt, wobei die Dimensionierung der Ausnehmungen 17 an die Exzentrizität des Hubzapfens 4 angepasst ist.

Die Kopplung zwischen den Kolben 5a-i und dem sternförmig ausgebildeten Pleuel 6 kann auf unterschiedlichste Art und Weise erfolgen. Im ersten Ausführungsbeispiel, welches in Fig. 1 dargestellt ist, sind zur Kopplung der Kolben 5a-i des Kolbensatzes mit dem zugehörigen sternförmig ausgebildeten Pleuel 6 in den Kolben 5a-i Langlöcher 13 vorgesehen, die quer zur jeweiligen Radialrichtung 12 verlaufen, wobei am sternförmig ausgebildeten Pleuel 6 Kopplungsbolzen 14 befestigt sind, die mit den Langlöchern 13 in Eingriff stehen bzw. abschnittsweise in den Langlöchern 13 angeordnet sind. D.h. die Bewegung der Kolben 5a-i erfolgt somit nach dem Prinzip einer Kurbelschleife. Im dargestellten Ausführungsbeispiel verlaufen die Langlöcher 13 im Wesentlichen geradlinig und im Wesentlichen normal zur jeweiligen Radialrichtung 12 sowie im Wesentlichen normal zur Drehachse 2. Die Kopplungsbolzen 14 verlaufen wiederum im Wesentlichen parallel zur Drehachse 2 bzw. stehen vom sternförmig ausgebildeten Pleuel 6 parallel zur Drehachse 2 ab.

Im ersten Ausführungsbeispiel gemäß Fig. 1 bilden zwei der Kopplungsbolzen 14 die Führungsbolzen 16 aus, indem diese Kopplungsbolzen 14 etwas länger als die restlichen Kopplungsbolzen 14 ausgebildet sind und durch das jeweilige Langloch 13 hindurch bis in die jeweilige Ausnehmung 17 des Führungsabschnitt 19 ragen. Die Anzahl der Teile wird hierdurch weiter reduziert.

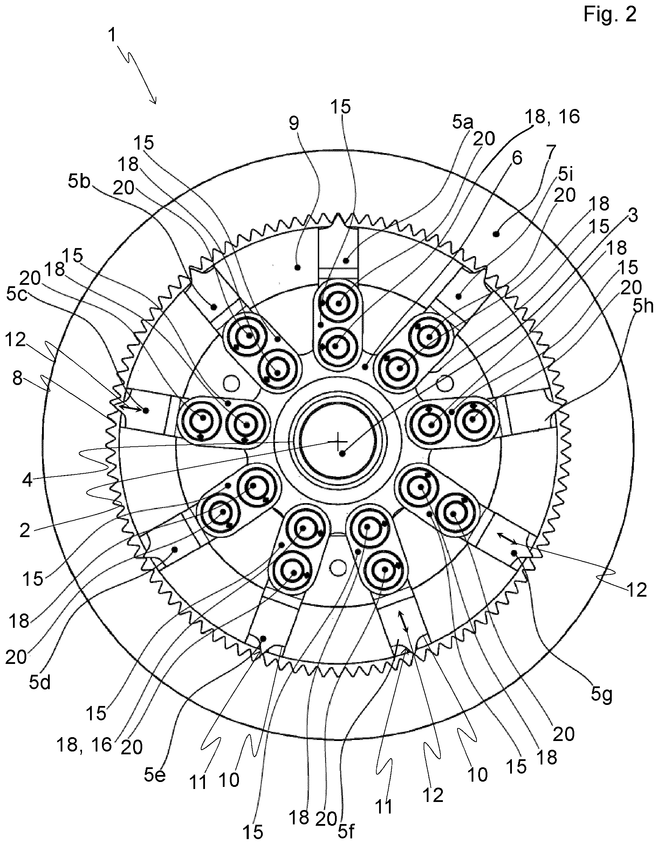

Das zweite Ausführungsbeispiel, das in Fig. 2 dargestellt ist, unterscheidet sich vom ersten Ausführungsbeispiel lediglich durch die Kopplung der Kolben 5a-i an das sternförmig ausgebildete Pleuel 6, weshalb zur grundsätzlichen Funktionsweise des Koaxialgetriebe 1 auf das oben Gesagte verwiesen wird. Konkret ist beim zweiten Ausführungsbeispiel vorgesehen, dass zur Kopplung der Kolben 5a-i des Kolbensatzes mit dem sternförmig ausgebildeten Pleuel 6 Zwischenglieder 15 vorgesehen sind, die im Wesentlichen starr ausgeführt sind, wobei jedes Zwischenglied 15 einerseits mit dem zugehörigen Kolben 5a-i gelenkig verbunden ist und andererseits mit dem sternförmig ausgebildeten Pleuel 6 gelenkig verbunden ist.

Im dargestellten Ausführungsbeispiel sind zur gelenkigen Verbindung zwischen dem jeweiligen Zwischenglied 15 und dem sternförmig ausgebildeten Pleuel 6 Verbindungsbolzen 18 vorgesehen, die Drehgelenke bzw. deren Drehachsen definieren, wobei diese Drehachsen parallel zur Drehachse 2 sind. Die Verbindungsbolzen 18 stehen dabei vom sternförmig ausgebildeten Pleuel 6 parallel zur Drehachse 2 ab. Um Teile einzusparen, bilden zwei der Verbindungsbolzen 18 gleichzeitig auch die Führungsbolzen 16 aus, indem diese Verbindungsbolzen 18 etwas länger als die restlichen Verbindungsbolzen 18 ausgebildet sind und bis in die jeweilige Ausnehmung 17 des Führungsabschnitt 19 ragen, vgl. Fig. 3.

Die gelenkige Verbindung zwischen dem jeweiligen Zwischenglied 15 und dem zugehörigen Kolben 5a-i ist im dargestellten zweiten Ausführungsbeispiel jeweils mittels eines Drehgelenks 20 realisiert sein, wobei die Drehachsen der Drehgelenke 20 parallel zur Drehachse 2 verlaufen.

In den beiden dargestellten Ausführungsbeispielen der Fig. 1 und Fig. 2 ist die Kurbelwelle 3 jeweils hohl entlang der Drehachse 2 ausgebildet, was z.B. das verdrehungsfreie Durchführen von Kabeln (nicht dargestellt) gestattet.

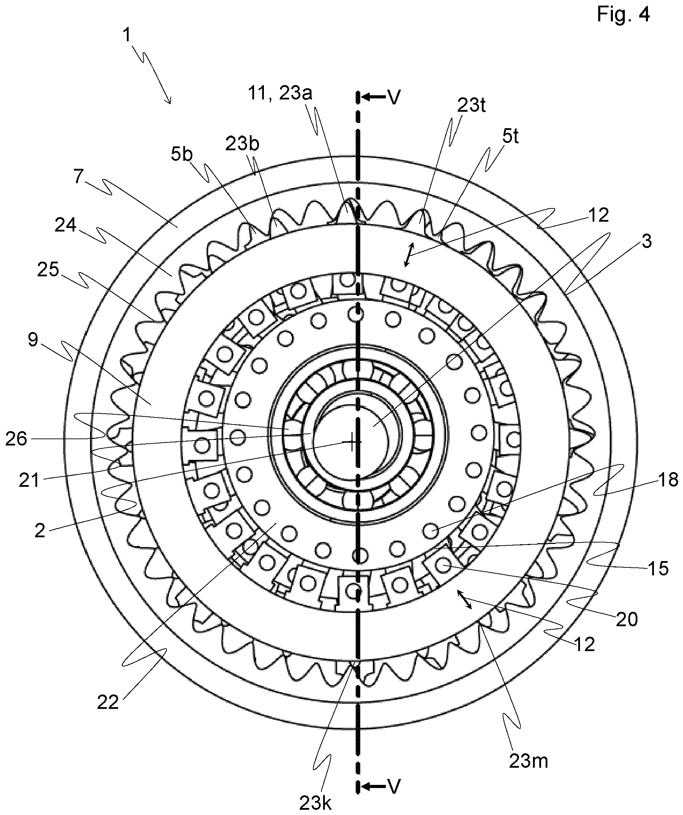

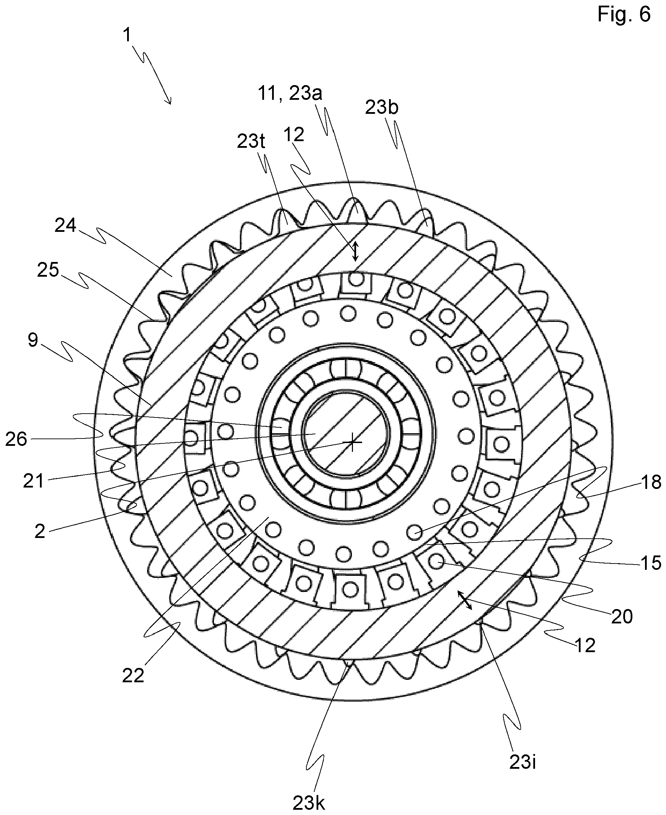

Sofern nicht anders angegeben, gilt für das dritte Ausführungsbeispiel das oben Gesagte und wird daher auf entsprechende Wiederholungen verzichtet. Im dritten Ausführungsbeispiel, welches in Fig. 4, Fig. 5 und Fig. 6 dargestellt ist, ist bezogen auf Drehbewegungen um die Drehachse 2 nicht die Führungseinheit 9 unbeweglich angeordnet bzw. gesperrt oder gebremst, sondern ist die Hohlwelle 7 gesperrt oder gebremst.

Das Koaxialgetriebe 1 umfasst in diesem Fall einen weiteren Hubzapfen 21 sowie einen weiteren Kolbensatz mit mehreren Kolben 23a-t, die jeweils an einer von der Drehachse 2 weg weisenden ersten Stirnseite 10 eine Verzahnung 11 mit mindestens einem Zahn aufweisen.

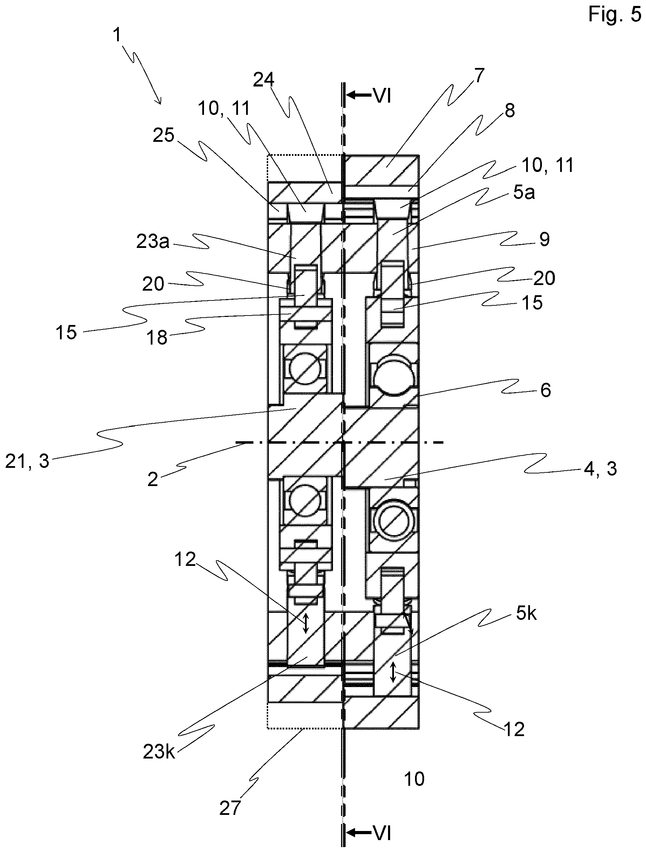

In diesem Ausführungsbeispiel ist die Exzenterwelle bzw. Kurbelwelle 3 einstückig mit dem Exzenter bzw. Hubzapfen 4 und dem weiteren Exzenter bzw. Hubzapfen 21 gefertigt, wobei die Hubzapfen 4, 21 entlang der Drehachse 2 gesehen unmittelbar hintereinander angeordnet sind, vgl. Fig. 5.

Zur Verbindung der Kolben 23a-t des weiteren Kolbensatzes mit dem weiteren Hubzapfen 21 ist ein weiteres sternförmig ausgebildetes Pleuel 22 vorgesehen, mit dem die Kolben 23a-t des weiteren Kolbensatzes gekoppelt sind.

Zur Kopplung der Kolben 23a-t mit dem weiteren sternförmig ausgebildeten Pleuel 22 sind wiederum Zwischenglieder 15 - in diesem Fall nicht des sternförmig ausgebildeten Pleuels 6, sondern des weiteren sternförmig ausgebildeten Pleuels 22 - vorgesehen. Die Zwischenglieder 15 sind auf Seite des weiteren sternförmig ausgebildeten Pleuels 22 mittels Verbindungsbolzen 18 drehbar gelagert und auf Seite der Kolben 23a-t mittels Drehgelenke 20 drehbar gelagert, wobei die zugehörigen Drehachsen parallel zur Drehachse 2 verlaufen.

Das weitere sternförmige Pleuel 22 ist am weiteren Hubzapfen 21 - analog zur Lagerung des sternförmigen Pleuels 6 am Hubzapfen 4 - mittels einer Lagerung gelagert, die im dargestellten Ausführungsbeispiel durch ein Nadellager 26 ausgebildet ist.

Im dargestellten dritten Ausführungsbeispiel umfasst das Koaxialgetriebe 1 außerdem eine weitere Hohlwelle 24 mit Innenverzahnung 25, wobei in einer auf die Drehachse 2 normal stehenden Ebene betrachtet die gesamte weitere Hohlwelle 24, innerhalb des Querschnitts der Hohlwelle 7 angeordnet ist, vgl. insbesondere Fig. 4 und Fig. 5.

Im dargestellten dritten Ausführungsbeispiel sind die Hohlwelle 7 und die weitere Hohlwelle 24 entlang der Drehachse 2 gesehen so hintereinander angeordnet, dass die weitere Hohlwelle 24 außerhalb der Hohlwelle 7 liegt und an diese unmittelbar anschließt. Es wäre aber natürlich auch möglich, dass die Hohlwelle 7 die weitere Hohlwelle 24 parallel zur Drehachse 2 überragt, insbesondere mit einem Abschnitt 27 der Hohlwelle 7, der keine Innenverzahnung 8 aufweist. Stattdessen kann dieser innenverzahnungsfreie Abschnitt 27 der Hohlwelle 7 ein Lager, insbesondere Gleitlager, für die weitere Hohlwelle 24 ausbilden. Eine solche mögliche Geometrie bzw. Auslegung der Hohlwelle 7 mit innenverzahnungsfreiem Abschnitt 27 ist in Fig. 5 durch die punktierten Linien angedeutet.

Die Kolben 23a-t des weiteren Kolbensatzes sind - wie die Kolben 5a-t des Kolbensatzes - jeweils in der Führungseinheit 9 linear geführt und parallel zur Radialrichtung 12 hin und her bewegbar. Hierdurch werden bei Drehung der Führungseinheit 9 um die Drehachse 2 die Verzahnungen 11 der ersten Stirnseiten 10 der Kolben 23a-t des weiteren Kolbensatzes nacheinander in Eingriff mit der Innenverzahnung 25 der weiteren Hohlwelle 24 und in einen von der Innenverzahnung 25 der weiteren Hohlwelle 24 losgelösten Zustand gebracht, um während des jeweiligen Eingriffs, vorzugsweise unter flächigem Kontakt zwischen der jeweiligen Verzahnung 11 und der Innenverzahnung 25 der weiteren Hohlwelle 24, die weitere Hohlwelle 24 um die Drehachse 2 weiter zu drehen.

Auf diese Weise ist ein zweistufiges Koaxialgetriebe 1 realisiert, wobei als Abtrieb die weitere Hohlwelle 24 fungiert und besonders hohe Übersetzungsverhältnisse realisierbar sind. In diesem Zusammenhang weisen beim dargestellten dritten Ausführungsbeispiel die Innenverzahnung 8 der Hohlwelle 7 und die Innenverzahnung 25 der weiteren Hohlwelle 24 eine unterschiedliche Anzahl an Zähnen auf.

Konkret gilt im dargestellten dritten Ausführungsbeispiel für die Zähnezahl za der Innenverzahnung 25 der weiteren Hohlwelle 24 za=41 und für die Zähnezahl zf der Innenverzahnung 8 der Hohlwelle 7 zf=42. Somit ergibt sich als Gesamtübersetzung i=za*(zf-1)/(za-zf)=-1681, also eine sehr große Übersetzung ins Langsame, wobei sich die Führungseinheit 9 und die weitere Hohlwelle 24 in entgegengesetzte Richtungen drehen.

Im dargestellten dritten Ausführungsbeispiel weisen der Hubzapfen 4 und der weitere Hubzapfen 21 die gleiche Exzentrizität auf, vgl. Fig. 5, was sich positiv im Hinblick auf einen Massenausgleich auswirkt.

Darüberhinaus ist beim dargestellten dritten Ausführungsbeispiel zur Optimierung des Massenausgleichs ein Hubzapfenversatz von 180° vorgesehen. D.h. der Hubzapfen 4 und der weitere Hubzapfen 21 sind bezogen auf die Drehachse 2 um 180° verdreht zueinander angeordnet, vgl. Fig. 5.

### BEZUGSZEICHENLISTE

- 1: Koaxialgetriebe
- 2: Drehachse
- 3: Kurbelwelle
- 4: Hubzapfen
- 5a-i,j-t: Kolben
- 6: Sternförmig ausgebildetes Pleuel
- 7: Hohlwelle
- 8: Innenverzahnung der Hohlwelle
- 9: Führungseinheit
- 10: Erste Stirnseite des Kolbens
- 11: Verzahnung auf der ersten Stirnseite
- 12: Radialrichtung
- 13: Langloch
- 14: Kopplungsbolzen
- 15: Zwischenglied
- 16: Führungsbolzen
- 17: Ausnehmung
- 18: Verbindungsbolzen
- 19: Führungsabschnitt
- 20: Drehgelenk
- 21: Weiterer Hubzapfen
- 22: Weiteres sternförmig ausgebildetes Pleuel
- 23a-t: Kolben eines weiteren Kolbensatzes
- 24: Weitere Hohlwelle
- 25: Innenverzahnung der weiteren Hohlwelle
- 26: Nadellager
- 27: Innenverzahnungsfreier Abschnitt der Hohlwelle

## Patentansprüche

1. Koaxialgetriebe (1) umfassend eine um eine Drehachse (2) drehbare Kurbelwelle (3) mit mindestens einem Hubzapfen (4), das Koaxialgetriebe (1) weiters umfassend mindestens einen Kolbensatz, der mehrere, vorzugsweise mindestens drei, Kolben (5a-i) aufweist, die jeweils an einer von der Drehachse (2) weg weisenden ersten Stirnseite (10) eine Verzahnung (11) mit mindestens einem Zahn aufweisen, das Koaxialgetriebe (1) weiters umfassend eine Hohlwelle (7) mit Innenverzahnung (8), wobei in einer auf die Drehachse (2) normal stehenden Ebene betrachtet die Kolben (5a-i) innerhalb der Hohlwelle (7) angeordnet sind,
das Koaxialgetriebe (1) weiters umfassend eine Führungseinheit (9), wobei die Kolben (5a-i) jeweils in der Führungseinheit (9) linear geführt und parallel zu einer normal auf die Drehachse (2) stehenden Radialrichtung (12) hin und her bewegbar sind,
wodurch die Verzahnungen (11) der ersten Stirnseiten (10) der Kolben (5a-i) nacheinander in Eingriff mit der Innenverzahnung (8) und in einen von der Innenverzahnung (8) losgelösten Zustand bringbar sind, um während des jeweiligen Eingriffs, vorzugsweise unter flächigem Kontakt zwischen der jeweiligen Verzahnung (11) und der Innenverzahnung (8), die Hohlwelle (7) oder die Führungseinheit (9) um die Drehachse (2) weiter zu drehen, **dadurch gekennzeichnet, dass** zur Verbindung der Kolben (5a-i) des jeweiligen Kolbensatzes mit dem zumindest einen Hubzapfen (4) jeweils ein gemeinsames, sternförmig ausgebildetes Pleuel (6), mit dem die Kolben (5a-i) des jeweiligen Kolbensatzes gekoppelt sind, vorgesehen ist.

2. Koaxialgetriebe (1) nach Anspruch 1, **dadurch gekennzeichnet, dass** mehrere Kolbensätze vorgesehen sind, wobei für jeden Kolbensatz jeweils ein gemeinsames, sternförmig ausgebildetes Pleuel (6) vorgesehen ist, mit dem die Kolben (5a-i) des jeweiligen Kolbensatzes gekoppelt sind.

3. Koaxialgetriebe (1) nach einem der Ansprüche 1 bis 2, **dadurch gekennzeichnet, dass** zur Sicherung einer orbitalen Bewegung und gegen ein darüberhinausgehendes Verdrehen relativ zur Führungseinheit (9) des jeweiligen, sternförmig ausgebildeten Pleuels (6) mindestens zwei Führungsbolzen (16) vorgesehen sind, die mit dem jeweiligen, sternförmig ausgebildeten Pleuel (6) starr verbunden sind und mit zumindest einer korrespondierenden Ausnehmung (17) zumindest eines Führungsabschnitts (19), der unbeweglich zur Führungseinheit (9) angeordnet ist, in Eingriff stehen.

4. Koaxialgetriebe (1) nach Anspruch 3, **dadurch gekennzeichnet, dass** an den Führungsbolzen (16) Rollen vorgesehen sind, um bei einer Bewegung der Führungsbolzen (16) in der mindestens einen korrespondierenden Ausnehmung (17) ein Abwälzen am zumindest einen Führungsabschnitt (19) zu erleichtern.

5. Koaxialgetriebe (1) nach einem der Ansprüche 1 bis 4, **dadurch gekennzeichnet, dass** zur Kopplung der Kolben (5a-i) des jeweiligen Kolbensatzes mit dem zugehörigen sternförmig ausgebildeten Pleuel (6) in den Kolben (5a-i) Langlöcher (13) vorgesehen sind, die quer zur jeweiligen Radialrichtung (12) verlaufen, wobei am sternförmig ausgebildeten Pleuel (6) Kopplungsbolzen (14) befestigt sind, die mit den Langlöchern (13) in Eingriff stehen.

6. Koaxialgetriebe (1) nach Anspruch 5 und nach einem der Ansprüche 3 bis 4, **dadurch gekennzeichnet, dass** zumindest einer der Kopplungsbolzen (14) auch zumindest einen Führungsbolzen (16) ausbildet.

7. Koaxialgetriebe (1) nach einem der Ansprüche 1 bis 4, **dadurch gekennzeichnet, dass** zur Kopplung der Kolben (5a-i) des jeweiligen Kolbensatzes mit dem zugehörigen sternförmig ausgebildeten Pleuel (6) Zwischenglieder (15) vorgesehen sind, die im Wesentlichen starr ausgeführt sind, wobei jedes Zwischenglied (15) einerseits mit dem zugehörigen Kolben (5a-i) gelenkig verbunden ist und andererseits mit dem sternförmig ausgebildeten Pleuel (6) gelenkig verbunden ist.

8. Koaxialgetriebe (1) nach Anspruch 7 und nach einem der Ansprüche 3 bis 4, **dadurch gekennzeichnet, dass** zur gelenkigen Verbindung zwischen dem jeweiligen Zwischenglied (15) und dem zugehörigen, sternförmig ausgebildeten Pleuel (6) Verbindungsbolzen (18) vorgesehen sind, wobei zumindest einer der Verbindungsbolzen (18) auch einen Führungsbolzen (16) ausbildet.

9. Koaxialgetriebe (1) nach einem der Ansprüche 1 bis 8, **dadurch gekennzeichnet, dass** die Verzahnungen (11) der ersten Stirnseiten (10) jeweils mehrere, vorzugsweise drei, Zähne aufweisen.

10. Koaxialgetriebe (1) nach einem der Ansprüche 1 bis 9, **dadurch gekennzeichnet, dass** die Kurbelwelle (3) hohl ausgeführt ist.

11. Koaxialgetriebe (1) nach einem der Ansprüche 1 bis 10, **dadurch gekennzeichnet, dass** die Kolben (5a-i) jeweils auf einer der ersten Stirnseite (10) gegenüberliegenden zweiten Stirnseite eine Verzahnung mit mindestens einem Zahn aufweisen, dass ein um die Drehachse (2) drehbar gelagerter Innenring mit Außenverzahnung vorgesehen ist, wobei die Führungseinheit (9) zumindest abschnittsweise zwischen dem Innenring und der Hohlwelle (7) angeordnet ist, wobei die Verzahnungen der zweiten Stirnseiten der Kolben (5a-i) nacheinander in Eingriff mit der Außenverzahnung des Innenrings und in einen von der Außenverzahnung des Innenrings losgelösten Zustand bringbar sind, um während des jeweiligen Eingriffs, vorzugsweise unter flächigem Kontakt zwischen der jeweiligen Verzahnung und der Außenverzahnung des Innenrings, den Innenring oder die Führungseinheit (9) um die Drehachse (2) weiter zu drehen.

12. Koaxialgetriebe (1) nach einem der Ansprüche 1 bis 11, **dadurch gekennzeichnet, dass** die Führungseinheit (9) unbeweglich zur Drehachse (2) angeordnet ist.

13. Koaxialgetriebe (1) nach einem der Ansprüche 1 bis 11, **dadurch gekennzeichnet, dass** bezogen auf Drehbewegungen um die Drehachse (2) die Hohlwelle (7) gesperrt oder gebremst ist,
dass ein weiterer Hubzapfen (21) vorgesehen ist,
dass ein weiterer Kolbensatz mit mehreren Kolben (23a-t) vorgesehen ist, die jeweils an einer von der Drehachse (2) weg weisenden ersten Stirnseite (10) eine Verzahnung (11) mit mindestens einem Zahn aufweisen,
dass zur Verbindung der Kolben (23a-t) des weiteren Kolbensatzes mit dem weiteren Hubzapfen (21) ein weiteres sternförmig ausgebildetes Pleuel (22) vorgesehen ist, mit dem die Kolben (23a-t) des weiteren Kolbensatzes gekoppelt sind,
dass eine weitere Hohlwelle (24) mit Innenverzahnung (25) vorgesehen ist, wobei in einer auf die Drehachse (2) normal stehenden Ebene betrachtet zumindest die Innenverzahnung (25) der weiteren Hohlwelle (24), vorzugsweise die gesamte weitere Hohlwelle (24), innerhalb des Querschnitts der Hohlwelle (7) angeordnet ist,
und dass die Kolben (23a-t) des weiteren Kolbensatzes jeweils in der Führungseinheit (9) linear geführt und parallel zur Radialrichtung (12) hin und her bewegbar sind, wodurch bei Drehung der Führungseinheit (9) um die Drehachse (2) die Verzahnungen (11) der ersten Stirnseiten (10) der Kolben (23a-t) des weiteren Kolbensatzes nacheinander in Eingriff mit der Innenverzahnung (25) der weiteren Hohlwelle (24) und in einen von der Innenverzahnung (25) der weiteren Hohlwelle (24) losgelösten Zustand bringbar sind, um während des jeweiligen Eingriffs, vorzugsweise unter flächigem Kontakt zwischen der jeweiligen Verzahnung (11) und der Innenverzahnung (25) der weiteren Hohlwelle (24), die weitere Hohlwelle (24) um die Drehachse (2) weiter zu drehen.

14. Koaxialgetriebe (1) nach Anspruch 13, **dadurch gekennzeichnet, dass** die Innenverzahnung (8) der Hohlwelle (7) und die Innenverzahnung (25) der weiteren Hohlwelle (24) eine unterschiedliche Anzahl an Zähnen aufweisen.

15. Koaxialgetriebe (1) nach einem der Ansprüche 13 bis 14, **dadurch gekennzeichnet, dass** der mindestens eine Hubzapfen (4) und der weitere Hubzapfen (21) die gleiche Exzentrizität aufweisen.

16. Koaxialgetriebe (1) nach einem der Ansprüche 13 bis 15, **dadurch gekennzeichnet, dass** der mindestens eine Hubzapfen (4) und der weitere Hubzapfen (21) bezogen auf die Drehachse (2) verdreht zueinander angeordnet sind, vorzugsweise um 360°/h, wobei h die Gesamtanzahl aller Hubzapfen ist.

## Claims

1. Coaxial transmission (1), comprising a crankshaft (3) which can be rotated about an axis of rotation (2) and has at least one crank pin (4), the coaxial transmission (1) further comprising at least one piston set which has a plurality, preferably at least three, pistons (5a-i) which each have a toothing (11) with at least one tooth on a first end face (10) facing away from the axis of rotation (2), the coaxial transmission (1) further comprising a hollow shaft (7) having an internal toothing (8), wherein the pistons (5a-i) are arranged within the hollow shaft (7) when viewed in a plane normal to the axis of rotation (2),
the coaxial transmission (1) further comprising a guide unit (9), wherein the pistons (5a-i) are each guided linearly in the guide unit (9) and can be moved back and forth parallel to a radial direction (12) normal to the axis of rotation (2), whereby the toothings (11) of the first end faces (10) of the pistons (5a-i) can be brought successively into engagement with the internal toothing (8) and into a state of disengagement from the internal toothing (8) in order, during the respective engagement, preferably with planar contact between the respective toothing (11) and the internal toothing (8), to further rotate the hollow shaft (7) or the guide unit (9) about the axis of rotation (2),
**characterized in that** a common, star-shaped connecting rod (6), to which the pistons (5a-i) of the respective piston set are coupled, is provided in each case for connecting the pistons (5a-i) of the respective piston set to the at least one crank pin (4).

2. Coaxial transmission (1) according to claim 1, **characterized in that** a plurality of piston sets is provided, wherein a common connecting rod (6) of star-shaped design is provided for each piston set, to which the pistons (5a-i) of the respective piston set are coupled.

3. Coaxial transmission (1) according to one of claims 1 to 2, **characterized in that** at least two guide pins (16) are provided for securing an orbital movement and against further rotation relative to the guide unit (9) of the respective star-shaped connecting rod (6), which are rigidly connected to the respective star-shaped connecting rod (6) and are in engagement with at least one corresponding recess (17) of at least one guide section (19), which is arranged immovably relative to the guide unit (9).

4. Coaxial transmission (1) according to claim 3, **characterized in that** rollers are provided on the guide pins (16) in order to facilitate rolling on the at least one guide section (19) when the guide pins (16) move in the at least one corresponding recess (17).

5. Coaxial transmission (1) according to one of claims 1 to 4, **characterized in that,** for coupling the pistons (5a-i) of the respective piston set to the associated star-shaped connecting rod (6), slotted holes (13) are provided in the pistons (5a-i), which slotted holes extend transversely to the respective radial direction (12), wherein coupling bolts (14) are fastened to the star-shaped connecting rod (6) and engage with the slotted holes (13).

6. Coaxial transmission (1) according to claim 5 and according to one of claims 3 to 4, **characterized in that** at least one of the coupling bolts (14) also forms at least one guide bolt (16).

7. Coaxial transmission (1) according to one of claims 1 to 4, **characterized in that,** for coupling the pistons (5a-i) of the respective piston set to the associated star-shaped connecting rod (6), intermediate members (15) are provided which are essentially of rigid design, wherein each intermediate member (15) is connected in an articulated manner to the associated piston (5a-i) on the one hand and is connected in an articulated manner to the star-shaped connecting rod (6) on the other hand.

8. Coaxial transmission (1) according to claim 7 and according to one of claims 3 to 4, **characterized in that** connecting bolts (18) are provided for the articulated connection between the respective intermediate member (15) and the associated star-shaped connecting rod (6), wherein at least one of the connecting bolts (18) also forms a guide bolt (16).

9. Coaxial transmission (1) according to one of claims 1 to 8, **characterized in that** the toothings (11) of the first end faces (10) each have a plurality of teeth, preferably three teeth.

10. Coaxial transmission (1) according to one of claims 1 to 9, **characterized in that** the crankshaft (3) is of hollow design.

11. Coaxial transmission (1) according to one of claims 1 to 10, **characterized in that** the pistons (5a-i) each have a toothing with at least one tooth on a second end face opposite the first end face (10), **in that** an inner ring with external toothing is provided which is mounted rotatably about the axis of rotation (2), wherein the guide unit (9) is arranged at least in sections between the inner ring and the hollow shaft (7), wherein the toothings of the second end faces of the pistons (5a-i) can be brought successively into engagement with the external toothing of the inner ring and into a state disengaged from the external toothing of the inner ring, in order to further rotate the inner ring or the guide unit (9) about the axis of rotation (2) during the respective engagement, preferably with planar contact between the respective toothing and the external toothing of the inner ring.

12. Coaxial transmission (1) according to one of claims 1 to 11, **characterized in that** the guide unit (9) is arranged immovably with respect to the axis of rotation (2).

13. Coaxial transmission (1) according to one of claims 1 to 11, **characterized in that,** with respect to rotational movements about the axis of rotation (2), the hollow shaft (7) is locked or braked,
**in that** a further crank pin (21) is provided,
**in that** a further piston set with a plurality of pistons (23a-t) is provided, each of which has a toothing (11) with at least one tooth on a first end face (10) facing away from the axis of rotation (2),
**in that** a further star-shaped connecting rod (22) is provided for connecting the pistons (23a-t) of the further piston set to the further crank pin (21), to which further star-shaped connecting rod (22) the pistons (23a-t) of the further piston set are coupled,
**in that** a further hollow shaft (24) with internal toothing (25) is provided, wherein at least the internal toothing (25) of the further hollow shaft (24), as viewed in a plane normal to the axis of rotation (2), preferably the entire further hollow shaft (24), is arranged within the cross-section of the hollow shaft (7),
and **in that** the pistons (23a-t) of the further piston set are each guided linearly in the guide unit (9) and can be moved back and forth parallel to the radial direction (12), whereby, upon rotation of the guide unit (9) about the axis of rotation (2), the toothings (11) of the first end faces (10) of the pistons (23a-t) of the further piston set can be brought successively into engagement with the internal toothing (25) of the further hollow shaft (24) and into a state disengaged from the internal toothing (25) of the further hollow shaft (24), in order to further rotate the further hollow shaft (24) about the axis of rotation (2) during the respective engagement, preferably with planar contact between the respective toothing (11) and the internal toothing (25) of the further hollow shaft (24).

14. Coaxial transmission (1) according to claim 13, **characterized in that** the internal toothing (8) of the hollow shaft (7) and the internal toothing (25) of the further hollow shaft (24) have a different number of teeth.

15. Coaxial transmission (1) according to one of claims 13 to 14, **characterized in that** the at least one crank pin (4) and the further crank pin (21) have the same eccentricity.

16. Coaxial transmission (1) according to one of claims 13 to 15, **characterized in that** the at least one crank pin (4) and the further crank pin (21) are arranged rotated relative to each other with respect to the axis of rotation (2), preferably by 360°/h, wherein h is the total number of all crank pins.

## Revendications

1. Transmission coaxiale (1) comprenant un vilebrequin (3) pouvant tourner autour d'un axe de rotation (2) et comportant au moins un maneton (4), la transmission coaxiale (1) comprenant en outre au moins un jeu de pistons qui présente plusieurs, de préférence au moins trois, pistons (5a-i) qui présentent chacun une denture (11) comportant au moins une dent sur une première face frontale (10) orientée à l'opposé de l'axe de rotation (2), la transmission coaxiale (1) comprenant en outre un arbre creux (7) muni d'une denture intérieure (8), les pistons (5a-i) étant disposés à l'intérieur de l'arbre creux (7), vu dans un plan perpendiculaire à l'axe de rotation (2),
la transmission coaxiale (1) comprenant en outre une unité de guidage (9), les pistons (5a-i) étant chacun guidés de manière linéaire dans l'unité de guidage (9) et pouvant être déplacés en va-et-vient parallèlement à une direction radiale (12) perpendiculaire à l'axe de rotation (2), de sorte que les dentures (11) des premières faces frontales (10) des pistons (5a-i) peuvent être amenées successivement en prise avec la denture intérieure (8) et dans un état séparé de la denture intérieure (8), afin de continuer à faire tourner l'arbre creux (7) ou l'unité de guidage (9) autour de l'axe de rotation (2) pendant la mise en prise respective, de préférence avec un contact plan entre la denture respective (11) et la denture intérieure (8), **caractérisée en ce que**, pour relier les pistons (5a-i) du jeu de pistons respectif audit au moins un maneton (4), il est prévu chaque fois une bielle commune (6), réalisée en forme d'étoile, à laquelle sont couplés les pistons (5a-i) du jeu de pistons respectif.

2. Transmission coaxiale (1) selon la revendication 1,
**caractérisée en ce qu'**il est prévu plusieurs jeux de pistons, une bielle commune (6) réalisée en forme d'étoile étant prévue pour chaque jeu de pistons, à laquelle sont couplés les pistons (5a-i) du jeu de pistons respectif.

3. Transmission coaxiale (1) selon l'une des revendications 1 à 2, **caractérisée en ce que** pour assurer un mouvement orbital et empêcher une rotation au-delà de celui-ci par rapport à l'unité de guidage (9) de la bielle respective (6) réalisée en forme d'étoile, il est prévu au moins deux boulons de guidage (16) qui sont reliés de manière rigide à la bielle respective (6) réalisée en forme d'étoile et qui sont en prise avec au moins un évidement correspondant (17) d'au moins une section de guidage (19) qui est disposée sans possibilité de déplacement par rapport à l'unité de guidage (9) .

4. Transmission coaxiale (1) selon la revendication 3,
**caractérisée en ce que** des galets sont prévus sur les boulons de guidage (16) pour faciliter un roulement sur ladite au moins une section de guidage (19) lors d'un mouvement des boulons de guidage (16) dans ledit au moins un évidement correspondant (17).

5. Transmission coaxiale (1) selon l'une des revendications 1 à 4, **caractérisée en ce que**, pour le couplage des pistons (5ai) du jeu de pistons respectif avec la bielle associée (6) réalisée en forme d'étoile, il est prévu dans les pistons (5a-i) des trous oblongs (13) qui s'étendent transversalement à la direction radiale respective (12), des boulons de couplage (14) qui sont en prise avec les trous oblongs (13) étant fixés sur la bielle (6) réalisée en forme d'étoile.

6. Transmission coaxiale (1) selon la revendication 5 et selon l'une des revendications 3 à 4, **caractérisée en ce qu'**au moins l'un des boulons de couplage (14) forme également au moins un boulon de guidage (16).

7. Transmission coaxiale (1) selon l'une des revendications 1 à 4, **caractérisée en ce que** pour le couplage des pistons (5a-i) du jeu de pistons respectif à la bielle associée (6) réalisée en forme d'étoile, il est prévu des organes intermédiaires (15) qui sont réalisés essentiellement de manière rigide, chaque organe intermédiaire (15) étant d'une part relié de manière articulée au piston associé (5a-i) et d'autre part relié de manière articulée à la bielle (6) réalisée en forme d'étoile.

8. Transmission coaxiale (1) selon la revendication 7 et selon l'une des revendications 3 à 4, **caractérisée en ce que** pour la liaison articulée entre l'organe intermédiaire respectif (15) et la bielle associée (6) réalisée en forme d'étoile, il est prévu des boulons de liaison (18), au moins l'un des boulons de liaison (18) formant également un boulon de guidage (16).

9. Transmission coaxiale (1) selon l'une des revendications 1 à 8, **caractérisée en ce que** les dentures (11) des premières faces frontales (10) présentent chacune plusieurs dents, de préférence trois dents.

10. Transmission coaxiale (1) selon l'une des revendications 1 à 9, **caractérisée en ce que** le vilebrequin (3) est creux.

11. Transmission coaxiale (1) selon l'une des revendications 1 à 10, **caractérisée en ce que** les pistons (5a-i) présentent chacun une denture comportant au moins une dent sur une deuxième face frontale opposée à la première face frontale (10), **en ce qu'**il est prévu une bague intérieure munie d'une denture extérieure, montée à rotation autour de l'axe de rotation (2), l'unité de guidage (9) étant disposée au moins sur certaines parties entre la bague intérieure et l'arbre creux (7), les dentures des deuxièmes faces frontales des pistons (5a-i) pouvant être amenées successivement en prise avec la denture extérieure de la bague intérieure et dans un état séparé de la denture extérieure de la bague intérieure, afin de continuer à faire tourner la bague intérieure ou l'unité de guidage (9) autour de l'axe de rotation (2) pendant la mise en prise respective, de préférence avec un contact plan entre la denture respective et la denture extérieure de la bague intérieure.

12. Transmission coaxiale (1) selon l'une des revendications 1 à 11, **caractérisée en ce que** l'unité de guidage (9) est disposée sans possibilité de déplacement par rapport à l'axe de rotation (2).

13. Transmission coaxiale (1) selon l'une des revendications 1 à 11, **caractérisée en ce que**, par rapport aux mouvements de rotation autour de l'axe de rotation (2), l'arbre creux (7) est bloqué ou freiné,
**en ce qu'**il est prévu un autre maneton (21),
**en ce qu'**il est prévu un autre jeu de pistons présentant plusieurs pistons (23a-t) qui présentent chacun sur une première face frontale (10) orientée à l'opposé de l'axe de rotation (2) une denture (11) comportant au moins une dent, **en ce que**, pour relier les pistons (23a-t) de l'autre jeu de pistons à l'autre maneton (21), il est prévu une autre bielle (22) réalisée en forme d'étoile, à laquelle sont couplés les pistons (23a-t) de l'autre jeu de pistons,
**en ce qu'**il est prévu un autre arbre creux (24) muni d'une denture intérieure (25), au moins la denture intérieure (25) de l'autre arbre creux (24), de préférence l'ensemble de l'autre arbre creux (24), étant, vue dans un plan perpendiculaire à l'axe de rotation (2), disposée à l'intérieur de la section transversale de l'arbre creux (7),
et **en ce que** les pistons (23a-t) de l'autre jeu de pistons sont chacun guidés de manière linéaire dans l'unité de guidage (9) et peuvent être déplacés en va-et-vient parallèlement à la direction radiale (12), de sorte que, lors de la rotation de l'unité de guidage (9) autour de l'axe de rotation (2), les dentures (11) des premières faces frontales (10) des pistons (23a-t) de l'autre jeu de pistons peuvent être amenées successivement en prise avec la denture intérieure (25) de l'autre arbre creux (24) et dans un état séparé de la denture intérieure (25) de l'autre arbre creux (24) pour continuer à faire tourner l'autre arbre creux (24) autour de l'axe de rotation (2) pendant la mise en prise respective, de préférence avec un contact plan entre la denture respective (11) et la denture intérieure (25) de l'autre arbre creux (24).

14. Transmission coaxiale (1) selon la revendication 13, **caractérisée en ce que** la denture intérieure (8) de l'arbre creux (7) et la denture intérieure (25) de l'autre arbre creux (24) présentent un nombre différent de dents.

15. Transmission coaxiale (1) selon l'une des revendications 13 à 14, **caractérisée en ce que** ledit au moins un maneton (4) et l'autre maneton (21) présentent la même excentricité.

16. Transmission coaxiale (1) selon l'une des revendications 13 à 15, **caractérisée en ce que** ledit au moins un maneton (4) et l'autre maneton (21) sont disposés de manière à être tournés l'un par rapport à l'autre par rapport à l'axe de rotation (2), de préférence de 360°/h, h étant le nombre total de tous les manetons.
